# EUROPÄISCHE PATENTANMELDUNG

(11) **EP 4 556 172 A1**
(43) Veröffentlichungstag der Anmeldung: **21.05.2025**
(21) Anmeldenummer: 23210596.5
(22) Anmeldetag: 17.11.2023
(51) Int. Cl.: B25J 5/00, B25J 9/00, B25J 11/00, B25J 19/00, B60L 53/80, B25J 9/08

(54) **BAUROBOTER MIT HOHER VERFÜGBARKEIT**

(71) Anmelder: Hilti Aktiengesellschaft, 9494 Schaan (LI)
(72) Erfinder: Brugger, Peter, 6800 Feldkirch (AT); Zanona, Julia, 6800 Feldkirch (AT)
(74) Vertreter: Hilti Aktiengesellschaft Corporate Intellectual Property

(57) **Zusammenfassung**

Die Erfindung betrifft einen **Bauroboter (10)** zur Ausführung von Bauaufgaben im Hochbau oder im Tiefbau, umfassend einen Roboterarm (12), beispielsweise einen mehrachsigen Arm, wobei zumindest der Roboterarm (12) elektrisch angetrieben ist, wobei zumindest der Roboterarm (12) eingerichtet ist, seine Betriebsenergie von einer Batterie (36) zu beziehen. Er ist dadurch gekennzeichnet, dass der Bauroboter (10) einen Wechselschacht (34) zur Aufnahme einer Batterie (36) zum elektrischen Antrieb des Roboterarms (12) aufweist. Dadurch kann der Bauroboter (10) besonders wirtschaftlich arbeiten.

## Beschreibung

Die Erfindung geht aus von einem Bauroboter, beispielsweise zur Ausführung von Bauaufgaben im Hochbau oder im Tiefbau, umfassend einen Roboterarm, beispielsweise einen mehrachsigen Arm, wobei zumindest der Roboterarm elektrisch angetrieben ist. Zumindest der Roboterarm ist eingerichtet, seine Betriebsenergie von einer Batterie zu beziehen.

Derartige Bauroboter kommen immer häufiger zur Entlastung von Bauarbeitern auf Baustellen zum Einsatz. Insbesondere können mit ihrer Hilfe ansonsten gefährliche oder stark belastende Arbeiten, beispielsweise Arbeiten an Decken, bequem durchgeführt werden. Derartige Bauroboter sind jedoch teuer in der Herstellung. Um eine wirtschaftliche Nutzung erreichen zu können, sollte konstruktiv für möglichst geringe Herstellungskosten gesorgt werden. Im Betrieb sollten die Bauroboter eine hohe Verfügbarkeit mit geringen Ausfallzeiten und damit verbunden einen geringen Wartungsaufwand aufweisen.

Aufgabe der vorliegenden Erfindung ist es daher, einen Bauroboter der eingangs genannten Art anzubieten, der möglichst kostengünstig herstellbar ist und mit einer hohen Verfügbarkeit eingesetzt werden kann.

Gelöst wird die Aufgabe durch einen Bauroboter, der einen Roboterarm umfasst. Zumindest der Roboterarm des Bauroboters ist elektrisch angetrieben. Der Roboterarm ist eingerichtet, seine Betriebsenergie von einer Batterie zu beziehen. Der Bauroboter weist einen Wechselschacht zur Aufnahme einer Batterie zum elektrischen Antrieb des Roboterarms auf.

Eine der Erfindung zugrunde liegende Erkenntnis ist es, dass, um eine hohe Verfügbarkeit zu erreichen, es nicht genügt, nur eine Batterie mit einer außerordentlich hohen Kapazität auszustatten, sodass der Bauroboter beispielsweise mehrere Tage ohne Unterbrechung arbeiten könnte. Denn mit der hohen Kapazität gehen auch lange Ladezeiten einher, sodass sich Ausfallzeiten verlängern und somit sich die effektive Verfügbarkeit des Bauroboters durch Erhöhung der Kapazität der Batterie nicht oder zumindest nicht wesentlich verbessern lässt. Da zudem der Materialaufwand der Batterie mit deren Kapazität mindestens linear ansteigt, bedeutet dies zudem, dass die erforderliche Batterie und damit der gesamte Bauroboter außerordentlich hohe Herstellungskosten aufweisen würde. Zudem würde der Bauroboter außerordentlich schwer und voluminös. Unter Umständen könnte ein solcher Bauroboter nicht einmal mehr alle vorgesehenen Einsatzorte erreichen. Beispielsweise könnten maximale Bodenbelastbarkeiten überschritten werden.

Hier setzt die Erfindung ein. Indem der Bauroboter einen Wechselschacht aufweist, kann eine Batterie mit einer geringen Kapazität, auch wenn sie pro Entladevorgang nur kurze Laufzeiten von beispielsweise wenigen Stunden ermöglicht, verwendet werden. Nach ihrer Entladung kann die Batterie gegen eine vollständig aufgeladene Batterie, beispielsweise während einer lediglich sehr kurzen Unterbrechung, sehr schnell gewechselt werden. Ausfallzeiten zum Wechsel der Batterie können, anders als Ladezeiten zum Aufladen einer fest in den Bauroboter eingebauten Roboter, auf ein sehr geringes Maß beschränkt bleiben. Dies kann eine sehr hohe Verfügbarkeit des Bauroboters ermöglichen. Wird beispielsweise zusätzlich zu der im Bauroboter jeweils montierten Batterie eine weitere Batterie verwendet, so kann diese weitere Batterie parallel zur Nutzung der Batterie im Bauroboter aufgeladen werden. So kann mit jeweils einer Batterie der Bauroboter betrieben werden, während die jeweils andere Batterie zeitgleich aufgeladen werden kann. Bei geeigneter Auslegung der Entladevorgänge und der Aufladevorgänge kann eine annähernd 100-prozentige Verfügbarkeit des Bauroboters erreicht werden. Selbst diese zwei Batterien können insgesamt deutlich günstiger sein als die vorangehend beschriebene theoretische Batterie. Die Herstellungskosten des Bauroboters können somit geringer ausfallen als im vorangehend beschriebenen theoretisch denkbaren Fall.

Unter einem Wechselschacht kann ein Batterieschacht verstanden werden, aus dem eine Batterie, insbesondere werkzeuglos, ausgebaut und / oder eingebaut werden kann.

Vorzugsweise können wiederaufladbare Batterien, also Akkumulatoren, verwendet werden.

Der Wechselschacht kann vorzugsweise von außen zugänglich ausgebildet sein, sodass der Bauroboter nicht erst zerlegt werden braucht, beispielsweise nicht erst ein Gehäuse abmontiert werden braucht, um die Batterie zu wechseln.

Bei einer weiter fortgebildeten Ausführung kann der Bauroboter wenigstens zwei Wechselschächte zur Aufnahme von Batterien aufweisen. Dann kann der Bauroboter durch einen der beiden Wechselschächte mit Energie versorgt werden. Eine Batterie des anderen Wechselschachtes kann währenddessen gewechselt werden. Somit lässt sich ein unterbrechungsfreier Betrieb auch während eines Batteriewechsels erreichen.

Besonders günstig kann es daher auch sein, wenn der Wechselschacht hot-swapping fähig ist. Dies bedeutet, dass der Wechselschacht eingerichtet ist, dass sich eine Batterie während des Betriebs des Bauroboters wechseln lässt, ohne dass es zu elektrischen Funktionsstörungen des Wechselschachts oder des gesamten Bauroboters kommt. Beispielsweise können Vorkehrungen getroffen sein, um Abrissfunken oder dergleichen zu vermeiden oder deren Auswirkungen auf den übrigen Wechselschacht oder den übrigen Bauroboter zu minimieren.

Der Bauroboter kann eingerichtet sein, selbsttätig die Batterie zu wechseln. Beispielsweise kann er eingerichtet sein, seinen Roboterarm zu steuern, um mit dessen Hilfe die Batterie aus dem Wechselschacht auszubauen und eine aufgeladene Batterie wieder einzubauen. Dadurch kann eine besonders hohe Verfügbarkeit des Bauroboters erzielt werden. Insbesondere ist dadurch sogar denkbar, dass der Bauroboter Bauaufgaben unbeaufsichtigt und über eine im Wesentlichen unbegrenzte Dauer hinweg ausführen kann.

Dies lässt sich besonders einfach erreichen, wenn der Bauroboter wenigstens zwei Wechselschächte aufweist, insbesondere wenn diese hot-swapping fähig sind. Der Bauroboter kann beispielsweise von einer Batterie, die sich in einem der beiden Wechselschächte befindet, elektrisch angetrieben werden. Beispielsweise mit Hilfe seines Roboterarms kann er dann eine Batterie, die sich in dem anderen Wechselschacht befindet, aus diesem ausbauen und eine andere, aufgeladene Batterie, wieder in diesen anderen Wechselschacht einbauen. Dann kann der Betrieb des Bauroboters auf den anderen Wechselschacht umgeschaltet werden. Die sich im ersten Wechselschacht befindliche Batterie kann nun in analoger Weise getauscht werden.

Vorzugsweise kann der Bauroboter mobil sein. Dazu kann er eine Fahrplattform aufweisen. Die Fahrplattform kann beispielsweise Räder, Ketten und / oder ein Luftkissen aufweisen.

Die Fahrplattform kann elektrisch antreibbar sein. Sie kann beispielsweise wenigstens einen elektrischen Motor aufweisen. Dazu kann vorgesehen sein, dass der Wechselschacht eingerichtet ist, dass eine in ihm aufgenommene Batterie die Fahrplattform elektrisch antreiben kann. Dann kann dieselbe Batterie verwendet werden, um auch die Fahrplattform anzutreiben, sodass insgesamt der Bauroboter kompakt gebaut sein kann.

Der Bauroboter kann ein mit der Fahrplattform verbundenes Funktionsmodul aufweisen. In dem Funktionsmodul können sich ein oder mehrere, für die auszuführende Bauaufgabe spezifisch notwendige Komponenten, beispielsweise ein Steuerrechner zur Steuerung spezifischer Bewegungen des Roboterarms, um die jeweilige Bauaufgabe auszuführen, befinden. Die Fahrplattform kann beispielsweise für die Fortbewegung des Bauroboters notwendige Komponenten umfassen.

Durch Kombination der Fahrplattform mit unterschiedlichen Arten von Funktionsmodulen kann auf besonders kostengünstige Weise eine große Vielfalt von Baurobotern hergestellt werden.

Das Funktionsmodul kann lösbar mit der Fahrplattform verbunden sein, sodass das Funktionsmodul einfach und kostengünstig gegen ein anderes, beispielsweise zur Implementierung einer anderen Funktionalität zur Ausführung anderer Bauaufgaben, ersetzt werden kann.

Der Wechselschacht kann an der Fahrplattform ausgebildet sein. Somit lässt sich eine standardisierte Energieversorgung bereitstellen, die unabhängig vom jeweiligen Funktionsmodul ausgebildet sein kann. Die Funktionsmodule können jeweils auf die durch den Wechselschacht bereitgestellte Energieversorgung zurückgreifen. Sie benötigen keine eigene Energieversorgung oder Energiequelle. Auch ist denkbar, dass dann bereits die Fahrplattform allein, ohne Funktionsmodul, als Transporter oder ähnliches genutzt werden kann.

Zur Vereinfachung von Wartungsarbeiten an der Fahrplattform kann vorgesehen sein, dass sich zumindest ein Teil des Funktionsmoduls relativ zur Fahrplattform verschieben und / oder verschwenken lässt.

Weiter ist denkbar, dass der Bauroboter eine Energieschnittstelle zur Energieversorgung des Funktionsmoduls aufweist, wobei der Bauroboter eingerichtet ist, die Energieschnittstelle in wenigstens zwei verschiedenen Energiemodi mit elektrischer Energie zu beaufschlagen. Die Energiemodi können sich beispielsweise in ihrer Nennspannung, der Art der bereitgestellten elektrischen Energie, insbesondere ob es sich um Gleichspannung oder Wechselspannung handelt, oder dergleichen unterscheiden. Denkbar ist beispielsweise, dass auf dieselben Leitungen unterschiedliche Spannungen schaltbar sind. Denkbar ist beispielsweise, dass 22 Volt, 24 Volt, und / oder 48 Volt als Gleichspannung wahlweise bereitgestellt werden können. Alternativ oder ergänzend kann auch eine Wechselspannung bereitgestellt werden. Die Wechselspannung kann beispielsweise einer Nominalspannung von 110 Volt oder 230 Volt entsprechen. Der jeweilige Energiemodus kann manuell oder selbsttätig einstellbar sein. Somit können auch unterschiedliche Arten von Funktionsmodulen mit der jeweils von ihnen benötigten elektrische Energie, insbesondere entsprechend einem der Energiemodi, versorgt werden.

Denkbar ist beispielsweise, dass eine Kennung des Funktionsmoduls durch den übrigen Bauroboter, beispielsweise durch eine Steuerung des Bauroboters, ausgelesen wird und entsprechend der Kennung der jeweils benötigte Energiemodus eingestellt wird.

Der Wechselschacht kann auch eingerichtet sein, wenigstens zwei verschiedene Typen von Batterien aufzunehmen. Beispielsweise ist denkbar, dass der Wechselschacht eingerichtet ist, Batterien unterschiedlicher Kapazität und / oder unterschiedlicher Nennspannung aufzunehmen. Dann bedarf es keines Wechselrichters oder dergleichen, um dem Funktionsmodul elektrische Energie in einem geeigneten Energiemodus bereitzustellen. Es kann vielmehr der jeweils geeignete Batterietyp in den Wechselschacht eingebaut werden.

Denkbar ist auch, je nach auszuführender Art der Bauaufgaben unterschiedliche Arten von Batterien zu verwenden. Beispielsweise ist denkbar, bei Bauaufgaben, die hohe Entlade-Leistungen erfordern, eine für Hochleistungsanwendungen spezialisierte Art zu verwenden, und für alle anderen Bauaufgaben, insbesondere für Bauaufgaben, die lediglich eine geringe Entlade-Leistung benötigen, eine kostengünstige Art von Batterien zu verwenden. Die kostengünstige Art von Batterien kann beispielsweise Batterien entsprechen, die bereits eine Vielzahl von Lade-/Entladezyklen durchlaufen sind und die dadurch, beispielsweise aus Sicherheitsgründen, nicht mehr für Hochleistungsanwendungen nutzbar sind. Hierdurch lässt sich der Bauroboter auch ressourcenschonend betreiben beziehungsweise seine Nachhaltigkeit weiter verbessern.

Denkbar ist auch, beispielsweise bei Bauaufgaben, die bekanntermaßen binnen kurzer Zeit erledigt werden können, Batterien einer geringeren Kapazität zu verwenden. Diese können günstiger sein als gleichartige Batterien mit einer größeren Kapazität. Dennoch können dann alle auszuführenden Bauaufgaben ausführbar sein. Die effektive Verfügbarkeit des Bauroboters für diese kurzen Bauaufgaben kann also dennoch sehr hoch bleiben. Die Amortisationsdauer lässt sich durch eine solche Maßnahme vorteilhafterweise verkürzen.

Denkbar ist ferner, die Batterie lediglich über einen reduzierten Ladezustandsbereich hinweg zu nutzen. Mit anderen Worten kann der Bauroboter eingerichtet sein, nur einen besonders geringen Anteil der Gesamtkapazität der Batterie zu nutzen. Beispielsweise kann der Bauroboter eingerichtet sein, lediglich die Batterie bis herunter auf 40 Prozent oder lediglich herunter bis auf 30 Prozent ihrer Kapazität zu entladen. Der Bauroboter oder ein Ladegerät zum Aufladen der Batterie kann eingerichtet sein, die Batterie bis zu 80 Prozent, insbesondere bis zu 70 Prozent, ihrer Kapazität zu aufzuladen. Zum Ausgleich können häufigere Batteriewechsel erfolgen. Dieses Verfahren kann dazu beitragen, die Batterien zu schonen und insbesondere deren Gesamtlebensdauer zu verlängern.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: einen Bauroboter in einer perspektivischen Darstellung von schräg hinten betrachtet,
- Fig. 2: eine Fahrplattform des Bauroboters in einer perspektivischen Ansicht von schräg hinten,
- Fig. 3: die Fahrplattform des Bauroboters in einer perspektivischen Ansicht von schräg vorne,
- Fig. 4: eine Wechselschachtanordnung sowie eine Batterie in perspektivischen Ansichten von schräg vorne,
- Fig. 5: die Wechselschachtanordnung in einer perspektivischen Ansicht von schräg hinten,
- Fig. 6: die Fahrplattform des Bauroboters in einer Seitenansicht,
- Fig. 7: die Fahrplattform des Bauroboters in einer teilgeschnittenen Ansicht mit Blick auf ein Funktionsmodul in einer perspektivischen Ansicht von schräg hinten, und
- Fig. 8: der Bauroboter in einer perspektivischen Ansicht von schräg vorne.

In der nachfolgenden Beschreibung der Figuren werden zur Erleichterung des Verständnisses der Erfindung für gleiche oder sich funktional entsprechende Elemente jeweils die gleichen Bezugszeichen verwendet.

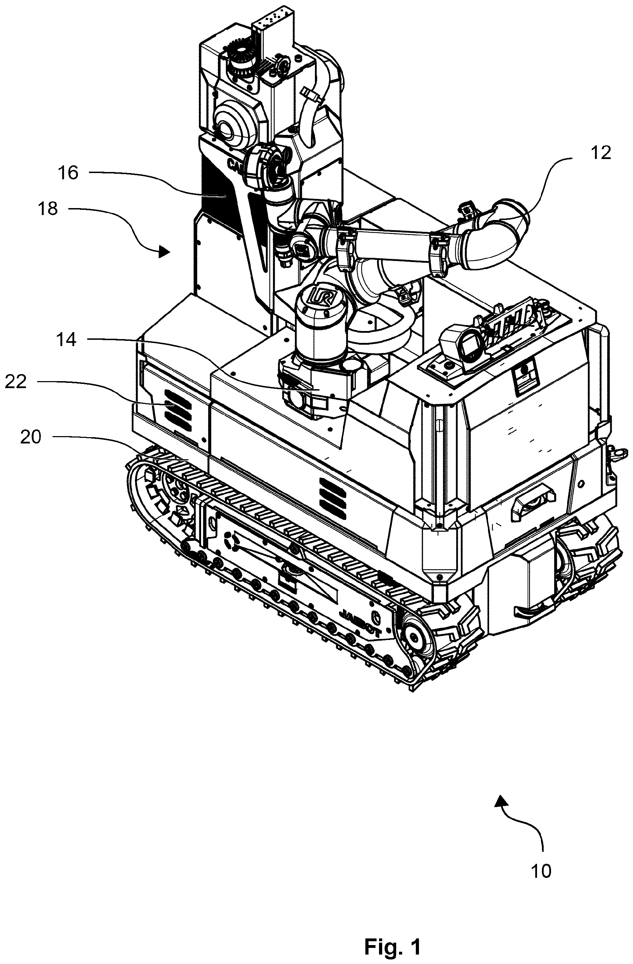

**Fig. 1** zeigt einen mobilen Bauroboter **10** zur Ausführung von Bauaufgaben an beispielsweise Wänden, Decken oder Böden. Erweist dazu einen Roboterarm **12** auf. Der Roboterarm 12 ist als mehrachsiger Roboterarm ausgebildet. Er weist wenigstens sechs Freiheitsgrade auf. Der Bauroboter 10 ist zum Einsatz bei Hochbau-Baustellen oder Tiefbau-Baustellen ausgerichtet. Je nach auszuführender Bauaufgabe ist ein Endeffektor **14** des Roboterarms 12 mit unterschiedlichen elektrischen Werkzeugmaschinen bestückt. Im vorliegenden Ausführungsbeispiel ist der Endeffektor 14 mit einer Schleifmaschine bestückt, um Schleifarbeiten auszuführen. In alternativen Ausführungen kann der Endeffektor 14 auch mit beispielsweise einer Bohrhammermaschine, einer Meißelmaschine oder einer Sägemaschine bestückt sein, um Bohrarbeiten, Abbrucharbeiten beziehungsweise Trennarbeiten auszuführen. Der Roboterarm 12 weist ferner eine Hubvorrichtung **16** auf, die seine Reichweite, insbesondere in vertikaler Richtung, erweitert. Der Roboterarm 12 ist am Rand einer Vorderseite **18** des Bauroboters 10 angeordnet, sodass der Bauroboter 10 an dicht an Wände oder Hindernisse heranreichenden Positionen Bauarbeiten ausführen kann.

Der Bauroboter 10 weist eine Breite von weniger als 80cm, insbesondere eine Breite von 76 cm, auf, um beispielsweise bei Hochbau-Baustellen auch durch schmale Türöffnungen, wie beispielsweise Türöffnungen von Bürozimmern hindurchzupassen.

Er ist weniger als 140 cm, insbesondere 130 cm, lang. Eine solche Länge hat sich als vorteilhaft herausgestellt, um beispielsweise auch in üblichen Treppenhäusern und Winkeln von Gängen ausreichend rangieren zu können. Allgemein ist der Bauroboter 10 durch sein kurze Länge und seine schmale Breite besonders wendig.

Der Bauroboter 10 weist zur Fortbewegung ferner eine Fahrplattform **20** auf, auf der ein Funktionsmodul **22** angeordnet ist.

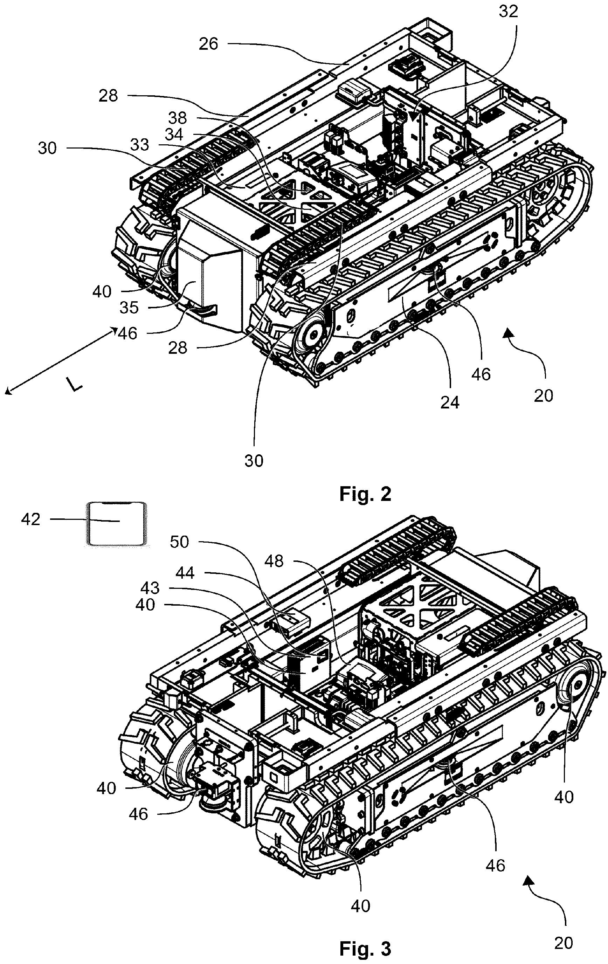

**Fig. 2** zeigt eine perspektivische Detailansicht der Fahrplattform 20. Die Fahrplattform 20 weist ein Kettenfahrwerk **24** auf.

Auf einem Rahmen **26** der Fahrplattform 20 sind Schienen **28** ausgebildet, auf denen sich das Funktionsmodul 22 (siehe Fig. 1) entlang einer Längsrichtung L des Bauroboters 10, insbesondere entsprechenden Freiraum vorausgesetzt nach vorne oder nach hinten, verschieben lässt.

Dazu weist das Funktionsmodul 22 an seiner Unterseite Rollen auf, die sich mittels eines Rastmechanismus in die Schienen 28 einklinken und an diesen festlegen lassen. Alle Leitungen wie beispielsweise Kabel oder Schläuche, die Elemente der Fahrplattform 20 mit Elementen des Funktionsmoduls 22 verbinden, sind mit Steckkontakten versehen, sodass sich insgesamt das Funktionsmodul 22 werkzeuglos auf der Fahrplattform 20 montieren beziehungsweise demontieren lässt.

Um das Funktionsmodul 22 entlang der Schienen 28 verschieben zu können, sind die Leitungen zum Funktionsmodul 22 in beweglichen Kabelführungen **30** geführt.

Durch Verschieben des Funktionsmoduls 22 nach außen lässt sich ein Innenbereich **32** der Fahrplattform 20 von außen erreichen.

Im Innenbereich 32 befindet sich eine Wechselschachtanordnung **33** mit vier hot swappingfähigen Wechselschächten **34,** von denen in Fig. 2 aus Darstellungsgründen lediglich einer der Wechselschächte 34 mit einem Bezugszeichen versehen ist. Die Wechselschachtanordnung 33 weist eine schwenkbare Abdeckung **35** als Schutz gegen äußere Einflüsse auf. Nach Verschwenken der Abdeckung 35 sind die Wechselschächte 34, beispielsweise für einen Batteriewechsel, von außen werkzeuglos zugänglich.

Anhand von **Fig. 2** und **Fig. 3** ist ferner zu erkennen, dass die Fahrplattform 20 vier Radmotoren **40** zur Fortbewegung der Fahrplattform 20 und damit des Bauroboters 10 (siehe Fig. 1) aufweist. Die Fahrplattform 20 und insbesondere die Radmotoren 40 lassen sich über eine Fernbedienung **42** steuern. Die Fernbedienung 42 ist als tragbarer Internet-fähiger Rechner, insbesondere in Form eines mit dem Internet verbindbaren Tablet Computers, ausgebildet. Die Fernbedienung 42 ist ferner eingerichtet, eine direkte Funkverbindung zum Bauroboter 10 aufzubauen, sodass sie diesen auch steuern kann, selbst wenn keine Internetverbindung verfügbar ist. Die Fahrplattform 20 weist einen Steuerrechner **43** mit einer - in Fig. 3 lediglich schematisch dargestellten - Funkschnittstelle **44** in Form einer kombinierten Wifi- und 5G-Funkschnittstelle, auf. Über die Funkschnittstelle 44 kann der Steuerrechner 43 eine Internetverbindung aufbauen, sodass er unter anderem Steuerbefehle der Fernbedienung 42 empfangen sowie weitere Daten, z. B. an einen entfernten, Cloud-basierten Rechner, empfangen oder senden kann.

An Seiten, insbesondere allen vier Seiten, der Fahrplattform 20 sind ferner optische Distanzmesser **46** in Form von LIDAR angeordnet, sodass eine unmittelbare Umgebung rundum den Fahrplattform 20 ohne tote Winkel überwacht werden kann. Somit können mit besonders hoher Sicherheit Personen-relevante Bewegungen des Bauroboters 10, insbesondere der Fahrplattform 20 sowie auch des Funktionsmoduls 22, überwacht werden. Die Distanzmesser 46 können zum Personenschutz und / oder zur Absturzsicherung dienen. Mit Hilfe der optischen Distanzmesser 46 lässt sich eine Fehlerwahrscheinlichkeit von weniger als 1 : 1 000 000, insbesondere von weniger als 1 : 5 000 000, erreichen.

Im Innenbereich 32 befindet sich ferner ein Sicherheitscontroller **48** in Form einer speicherprogrammierbaren Steuerung, allgemein auch in Englisch als "programmable logic controller", abgekürzt "PLC", bezeichnet. Auf die Eingänge des Sicherheitscontrollers 48 sind Signale aller an der Fahrplattform 20 befindlichen Sensoren sowie von den Wechselschächten 34 kommende Versorgungsleitungen geschaltet. Die Ausgänge des Sicherheitscontrollers 48 führen zu Aktoren der Fahrplattform 20 als auch über die Kabelführungen 30 zu dem Funktionsmodul 22 (siehe Fig. 1). Dabei können unter "Sensoren" alle Vorrichtungen verstanden werden, die Messdaten erfassen, wie beispielsweise die vorangehend genannten optischen Distanzmesser, an den Wechselschächten 34 ausgebildete Strom- und Spannungssensoren, an den Radmotoren 40 befindliche Bewegungssensoren, Positionssensoren des Roboterarms 12 oder dergleichen verstanden werden. Unter "Aktoren" können alle Vorrichtungen verstanden werden, die die an den Eingängen ankommende Daten und die elektrischen Energie weiter nutzen. Aktoren sind beispielsweise die Radmotoren 40, Stellmotoren des Roboterarms 12, Motoren des Funktionsmoduls 22, der Steuerrechner 43, oder dergleichen.

Im Innenraum 32 befindet sich ferner eine mit dem Steuerrechner 43 inertiale Messeinheit **50,** englisch inertial measurement unit, abgekürzt: IMU. Die IMU 50 wird unter anderem vom Steuerrechner 43 sowie dem Sicherheitscontroller 48 genutzt, um Bewegungsdaten der Fahrplattform 20 zu sammeln, auszuwerten und zu überwachen. Insbesondere kann durch Überwachen der Neigung, der Drehrichtung und der Geschwindigkeit der Fahrplattform 20 und ggf. Gegensteuern des Roboterarms 12 der Bauroboter 10 gegen unbeabsichtigtes Umstürzen gesichert werden. Neigungsdaten können ferner genutzt werden, um neigungsbedingte Abweichungen des Roboterarms 12 von zu erreichenden Zielpositionen zu kompensieren.

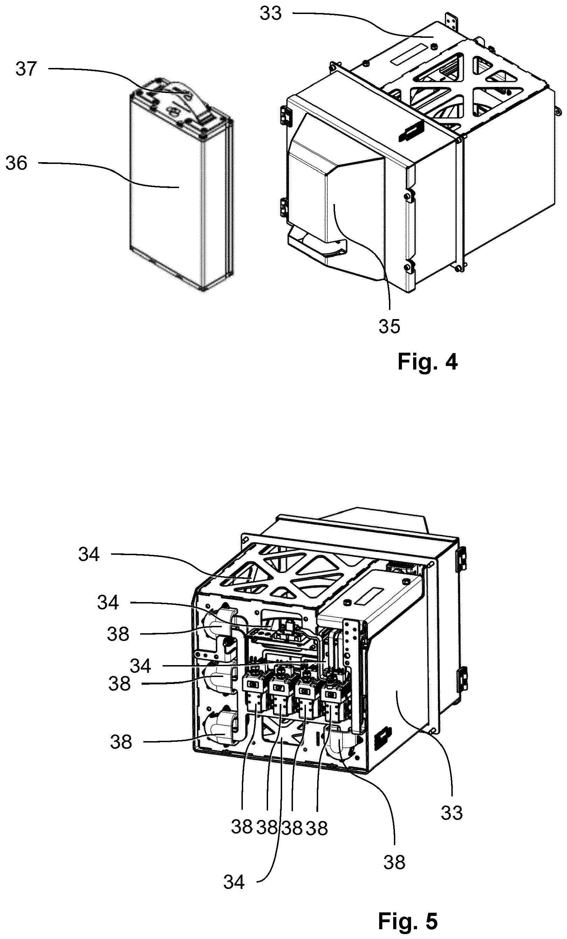

**Fig. 4** zeigt eine Wechselschachtanordnung 33 sowie eine Batterie **36** in perspektivischen Ansichten von schräg vorne. **Fig. 5** zeigt die Wechselschachtanordnung 33 in einer perspektivischen Ansicht von schräg hinten.

Die Wechselschachtanordnung 33 weist vier Wechselschächte 34 auf. Die Wechselschächte 34 dienen zur Aufnahme von jeweils einer Batterie, beispielsweise entsprechend der Art der Batterie 36. Die Batterien 36 dienen zum elektrischen Antrieb des Bauroboters 10 (siehe Fig. 1), insbesondere des Roboterarms 12 (siehe Fig. 1), der Fahrplattform 20 und des Funktionsmoduls 22.

Die Batterie 36 ist eine Lithium-basierte Batterie, beispielsweise auf Basis von LiFePO₄ oder Li-NMC. Denkbar ist auch, dass die Batterie Na-basiert ist. Die Batterie 36 weist eine Kapazität von 2,5 kWh. Sie weist ein Gewicht von 16 kg auf. Allgemein kann die Batterie 36 vorzugsweise weniger als 25 kg, insbesondere von weniger als 20 kg, aufweisen, sodass sie von einem Benutzer des Bauroboters 10 ohne weitere Hilfsmittel transportiert, insbesondere getragen, werden kann. Dazu weist die Batterie 36 einen Griff **37** auf.

Mit mehreren Exemplaren der Batterie 36 kann somit durch die Wechselschachtanordnung 33 eine Gesamtkapazität von wenigstens 10 kWh, insbesondere von wenigstens 20kWh, bereitgestellt werden. Somit kann der Bauroboter selbst ohne Batteriewechsel und unter Vermeidung von Tiefentladungen eine Dauerleistung von wenigstens 1 kW, insbesondere von wenigstens 2 kW, über wenigstens 8 h nutzen. Dies kann vorteilhaft für besonders weit abgelegene Baustellen sein, auf denen ansonsten keine Ladestation oder dergleichen zum Aufladen der Batterien 36 verfügbar ist.

Die Wechselschächte 34 weisen Energieschnittstellen **38** mit Buchsen zum Anschluss der Batterien 36 auf. Die Buchsen befinden sich innenseitig an Rückseiten der Wechselschächte 34, sodass sich unterschiedliche Arten von Batterien 36, insbesondere unterschiedlicher Größen, Nennspannungen oder Kapazitäten, in die Wechselschächte 34 einsetzen lassen. Die Energieschnittstellen 38 dienen zur Energieversorgung des gesamten Bauroboters 10, also unter anderem der Fahrplattform 20, des Roboterarms 12 und des Funktionsmoduls 22. Sie umfassen DC/DC-Wandler und DC/AC-Wandler, um die je nach Art der Batterien 36 bereitgestellten Nennspannungen und Nennströme in unterschiedliche Energiemodi, insbesondere je nach Art des Funktionsmoduls 22 sowie je nach Bedarf des Roboterarms 12, insbesondere des Endeffektors 14 (siehe Fig. 1), umzuwandeln. Auch können dadurch unterschiedliche Ladezustände der Batterien 36 (siehe Fig. 4) und damit einhergehende Spannungen ausgeglichen werden. Auch ein Lastmanagement ist damit einhergehend installiert. Insbesondere können Gleichspannungen von 24 V und 48 V sowie eine Wechselspannung von 230 V bereitgestellt werden.

Die von den Batterien 36 bereitgestellte elektrische Energie wird zum Schutz vor Überlastungen über Schütze **39** geführt.

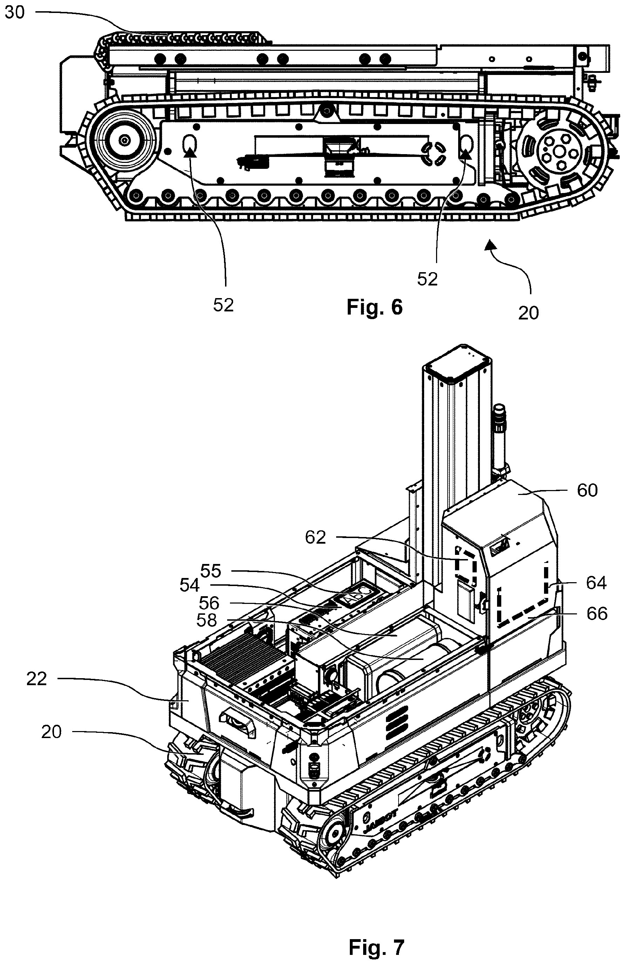

Wie in **Fig. 6** dargestellt, weist die Fahrplattform 20 an ihren Längsseiten jeweils zwei, also insgesamt wenigstens vier, Verzurrpunkte **52** auf, an denen Tragseile oder dergleichen zur Kranverladung angebracht werden können. Die Verzurrpunkte 52 sind als Ausnehmungen in einer Seitenwand der Fahrplattform 20 ausgebildet, sodass sie nicht von der übrigen Fahrplattform 20 abstehen, sodass Verletzungsgefahren durch die Verzurrpunkte 52 minimiert sind.

Anhand der Seitenansicht gemäß Fig. 6 ist auch zu erkennen, dass die Fahrplattform 20, abgesehen von den beweglichen Kabelführungen 30, oberseitig eben ausgebildet ist.

**Fig. 7** zeigt in einer teilgeschnittenen Ansicht das auf der Fahrplattform 20 angeordnete Funktionsmodul 22. Im Funktionsmodul 22 befindet sich ein Steuerrechner **54** zur Steuerung des Roboterarms 12. Auf dem Steuerrechner 54 befindet sich spezifisch zur Ausführung der jeweiligen Art von Bauaufgaben, für die der Bauroboter 10 vorgesehen ist, ausgebildeter Programmcode **55.** Der Programmcode 55 ist in Fig. 7 lediglich schematisch dargestellt. Er kann auch eine Programmcodekomponente umfassen, die den Bauroboter 10 bei Bedarf steuert, eine bis zu einem bestimmten Ladezustand entladene Batterie 36 (siehe Fig. 4) gegen eine aufgeladene Batterie 36 zu tauschen und die entladene Batterie 36 an ein externes Ladegerät anzuschließen.

Zur Erzeugung, Speicherung und dosierten Abgabe von Druckluft weist das Funktionsmodul 22 ferner einen Druckluftkompressor **56** und einen Drucklufttank **58** auf. Die Druckluft wird über Leitungen zum Roboterarm 12 geführt und steht dort am Endeffektor 14 (siehe Fig. 1) zur Verfügung. Ferner weist das Funktionsmodul 22 in einem Gehäuseteil **60** einen lediglich schematisch dargestellten Unterdruckgenerator **62** in Form einer Staubabsaugung auf. Ein ebenfalls lediglich schematisch dargestellter Staubsammelbehälter **64** befindet sich hinter einer Abdeckklappe **66.** Er ist mittels eines Hubrastmechanismus werkzeuglos entnehmbar.

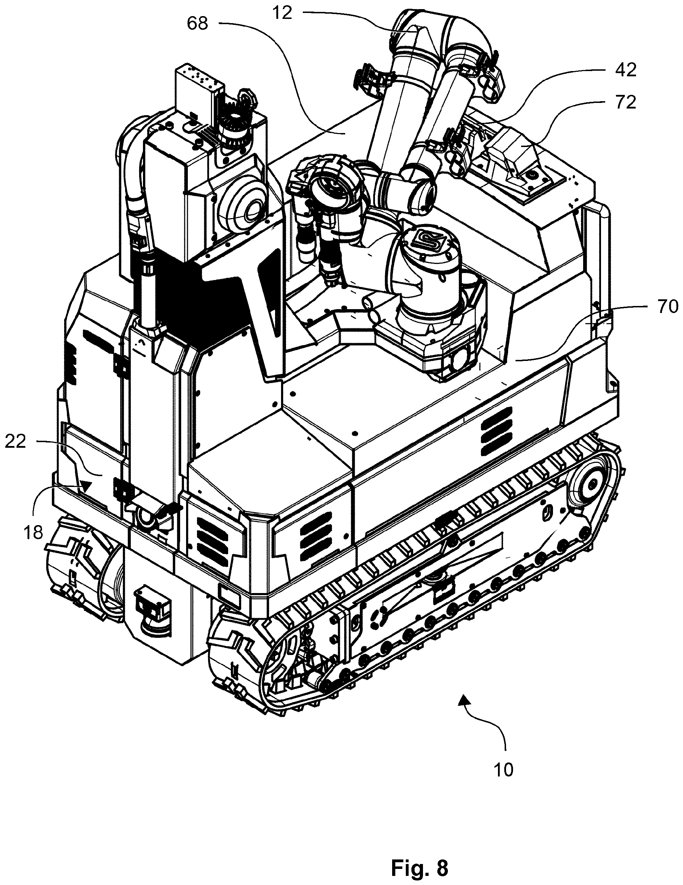

**Fig. 8** zeigt eine perspektivische Ansicht des Bauroboters 10. Zu erkennen ist, dass auf dem Funktionsmodul 22 ein Applikationsmodul **68** angeordnet ist. Das Applikationsmodul 68 deckt das Funktionsmodul 22 ab. Über das Applikationsmodul 68 werden für die jeweilige Art von Bauaufgaben, für die der Bauroboter 10 ausgebildet ist, erforderliche zusätzliche Elemente bereitgestellt. Insbesondere gibt es mehrere Ablagemöglichkeiten, von denen beispielhaft ein Schubfach **70** mit einem Bezugszeichen markiert ist. An den Ablagemöglichkeiten, insbesondere den Schubfächern 70, können beispielsweise für eine genaue Lokalisierung des Bauroboters 10 eine Totalstation abgelegt sein. Verbrauchsmaterialien, beispielsweise Zubehör wie beispielsweise Gesteinsbohrer, Schleifmaterial oder Sägeblätter oder zu verarbeitende Materialien wie beispielsweise Anker, Schrauben, Dübel, können an Ablagemöglichkeiten an der Hubvorrichtung 16 und / oder auf dem Applikationsmodul 68 bevorratet sein.

Weiter befindet sich, insbesondere aufgrund der guten Erreichbarkeit, die Fernbedienung 42 auf dem Applikationsmodul 68. Die Fernbedienung 42 ruht auf einer Halterung und lässt sich werkzeuglos vom Applikationsmodul 68 abnehmen.

Weiter befindet sich auf dem Applikationsmodul 68 ein Notfallknopf **72,** der bei Betätigung Bewegungen des Bauroboters 10 schnellstmöglich stoppt.

Aus Fig. 8 ist ferner erkennbar, dass die Hubvorrichtung 16 von der Vorderseite 18 des Bauroboters 10 zugänglich ist. Wartungsarbeiten oder gegebenenfalls ein Austausch des Roboterarms 12 oder eines Teils desselben, beispielsweise der Hubvorrichtung 16, werden dadurch vereinfacht.

### Bezugszeichenliste

- 10: Bauroboter
- 12: Roboterarm
- 14: Endeffektor
- 16: Hubvorrichtung
- 18: Vorderseite
- 20: Fahrplattform
- 22: Funktionsmodul
- 24: Kettenfahrwerk
- 26: Rahmen
- 28: Schiene
- 30: Kabelführung
- 32: Innenbereich
- 33: Wechselschachtanordnung
- 34: Wechselschacht
- 35: Abdeckung
- 36: Batterie
- 37: Griff
- 38: Energieschnittstelle
- 39: Schutz
- 40: Radmotor
- 42: Fernbedienung
- 43: Steuerrechner
- 44: Funkschnittstelle
- 46: Distanzmesser
- 48: Sicherheitscontroller
- 50: IMU
- 52: Verzurrpunkt
- 54: Steuerrechner
- 55: Programmcode
- 56: Druckluftkompressor
- 58: Drucklufttank
- 60: Gehäuseteil
- 62: Unterdruckgenerator
- 64: Staubsammelbehälter
- 66: Abdeckklappe
- 68: Applikationsmodul
- 70: Schubfach
- 72: Notfallknopf
- 10: Bauroboters
- 12: Roboterarms
- 22: Funktionsmoduls
- 34: Wechselschachts
- 28: Schienen

## Patentansprüche

1. **Bauroboter (10)** zur Ausführung von Bauaufgaben im Hochbau oder im Tiefbau, umfassend einen Roboterarm (12), beispielsweise einen mehrachsigen Arm, wobei zumindest der Roboterarm (12) elektrisch angetrieben ist, wobei zumindest der Roboterarm (12) eingerichtet ist, seine Betriebsenergie von einer Batterie (36) zu beziehen,
**dadurch gekennzeichnet,**
**dass** der Bauroboter (10) einen Wechselschacht (34) zur Aufnahme einer Batterie (36) zum elektrischen Antrieb des Roboterarms (12) aufweist.

2. Bauroboter (10) nach dem vorhergehenden Anspruch, **dadurch gekennzeichnet, dass** der Bauroboter (10) wenigstens zwei Wechselschächte (34) zur Aufnahme von Batterien (36) aufweist.

3. Bauroboter (10) nach einem der vorhergehenden Ansprüche, **dadurch gekennzeichnet, dass** der Wechselschacht (34) hot-swapping fähig ist.

4. Bauroboter (10) nach einem der vorhergehenden Ansprüche, **dadurch gekennzeichnet, dass** der Bauroboter (10) eingerichtet ist, selbsttätig die Batterie (36) zu wechseln.

5. Bauroboter (10) nach einem der vorhergehenden Ansprüche, **dadurch gekennzeichnet, dass** der Bauroboter (10) eine Fahrplattform (20) und ein mit der Fahrplattform (20) verbundenes Funktionsmodul (22) aufweist.

6. Bauroboter (10) nach einem der vorhergehenden Ansprüche, **dadurch gekennzeichnet, dass** der Wechselschacht (34) eingerichtet ist, dass eine in ihm aufgenommene Batterie (36) die Fahrplattform (20) elektrisch antreiben kann.

7. Bauroboter (10) nach einem der vorhergehenden Ansprüche, **dadurch gekennzeichnet, dass** das Funktionsmodul (22) lösbar mit der Fahrplattform (20) verbunden ist.

8. Bauroboter (10) nach einem der vorhergehenden Ansprüche, **dadurch gekennzeichnet, dass** sich zumindest ein Teil des Funktionsmoduls (22) relativ zur Fahrplattform (20) verschieben und / oder verschwenken lässt.

9. Bauroboter (10) nach einem der vorhergehenden Ansprüche, **dadurch gekennzeichnet, dass** der Wechselschacht (34) an der Fahrplattform (20) ausgebildet ist.

10. Bauroboter (10) nach einem der vorhergehenden Ansprüche, **dadurch gekennzeichnet, dass** der Bauroboter (10) eine Energieschnittstelle (38) zur Energieversorgung des Funktionsmoduls (22) aufweist, wobei der Bauroboter (10) eingerichtet ist, die Energieschnittstelle (38) in wenigstens zwei verschiedenen Energiemodi mit elektrischer Energie zu beaufschlagen.

11. Bauroboter (10) nach einem der vorhergehenden Ansprüche, **dadurch gekennzeichnet, dass** der Wechselschacht (34) eingerichtet ist, wenigstens zwei verschiedene Typen von Batterien (36) aufzunehmen.
